Europäisches Patentamt

European Patent Office

Office européen des brevets

(11) Publication number: **0 358 505**
**A2**

(12) # EUROPEAN PATENT APPLICATION

(21) Application number: **89309083.7**

(51) Int. Cl.5: **C 09 D 11/16**
**// B41M1/28**

(22) Date of filing: **07.09.89**

(30) Priority: **09.09.88 GB 8821201**
**01.07.89 GB 8915170**

(43) Date of publication of application:
**14.03.90 Bulletin 90/11**

(84) Designated Contracting States:
**AT BE CH DE ES FR GR IT LI LU NL SE**

(71) Applicant: **GILD-A-GIFT LIMITED**
**11 Highbanks Road**
**Pinner Middlesex HA5 4AR (GB)**

(72) Inventor: **Deutrom, Arthur Malcolm Everard**
**11 Highbanks Road Pinner**
**Middlesex HA5 4AR (GB)**

(74) Representative: **Knott, Stephen Gilbert et al**
**MATHISEN, MACARA & CO. The Coach House 6-8**
**Swakeleys Road**
**Ickenham Uxbridge Middlesex UB10 8BZ (GB)**

(54) Handwriting on metal surfaces.

(57) A surface of an article is formed of annodised aluminium. The surface will accept handwriting in a permanent spirit-based waterproof ink. The handwriting is permanent and unaffected by liquids such as, for example, water. The surface may be the surface of a gift tag.

Fig.1.

EP 0 358 505 A2

## Description

## HANDWRITING ON METAL SURFACES

The invention relates to the provision of handwriting on metal surfaces.

Herefore, it has not been possible to apply handwriting to a metal surface. In general, the writing medium used will not produce legible and indelible characters.

According to a first aspect of the invention, there is provided an article having a metal surface which carries handwriting in a permanent spirit-based waterproof ink.

The permanent spirit-based waterproof ink may be a mixture of low boiling point alcohols and glycolethers in which is disolved a dye.

According to a second aspect of the invention, there is provided a kit of parts comprising an article having a metal surface of and a pen having a permanent spirit-based waterproof ink.

According to a third aspect of the invention, there is provided a method of writing a message on a surface of metal or metal alloy comprising writing on the surface using a permanent spirit-based waterproof ink.

In all the above aspects, the article may be a metal tag or a metal plaque or a metal panel.

The surface may be, for example, of anodized aluminium, stainless steel or gold. The article is preferably in the form of a sheet. The sheet may be square, rectangular or circular.

The article, when in the form of a sheet, may include means, such as a hole, by which the article may be connected to another article.

Preferably the article also has printing on its surface.

The following is a more detailed description of one embodiment of the invention, by way of example, reference being made to the accompanying drawing in which:-

Figure 1, shows a first form of gift tag in plan view,

Figure 2 shows a second form of gift tag in plan view, and

Figure 3 shows a third form of gift tag in plan view.

The gift tags shown in all the Figures are made from annodised aluminium. Each gift tag is generally rectangular in shape and is formed from a sheet of annodised aluminium which may be about 0.5 to 1 mm in thickness and 8.5 cm by 5 cm in length and breadth. The colour of the gift tag may be varied as required. For example, it may be black or silver or gold or any other suitable colour.

It will be appreciated, of course, that the gift tags could be made from metals or metal alloys other than annodised aluminium and that the thickness and surface dimensions of the gift tags could be varied as required. The metal may be stainless steel or gold.

Each gift tag has, adjacent one of the shorter edges 10, a hole 11 through which an elongate flexible member, such as a decorative cord or string, may be passed to attach the gift tag to a gift. It will be appreciated, however, that the hole may be provided elsewhere on the gift tag or there may be other means by which the tag can be connected to a gift.

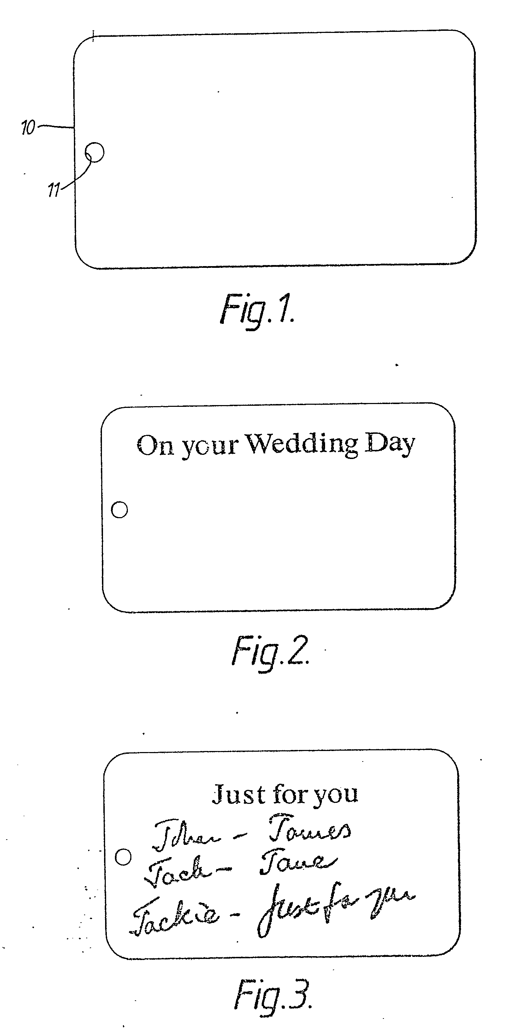

Referring now to the individual embodiments, the gift tag of Figure 1 has a plain surface on which a message may be handwritten. This can be by use of a permanent spirit-based waterproof ink. Such an ink is used in a felt-tip a pen sold under the trade mark PILOT SC-UF. Such inks consist mainly of low boiling point alcohols and glycolethers in which are disolved small quantities of die stuffs. The free ink has a flash point of about 18°C.

The gift tag of Figure 2 has a preprinted message on its surface. To this message may be added a handwritten message using a pen of the kind described above with reference to Figure 1.

Figure 3 shows a gift tag which contains a printed message and also contains various handwritten messages using a pen of the kind described above with reference to Figure 1.

It has been found that a handwritten message applied in this way is permanent in its nature, and cannot be erased by, for example, rubbing. The gift tag is useful for florists because it is unaffected by water. The gift tag is permanent and can be retained by the recipient long after receipt of the gift, as a reminder of the gift.

It will be appreciated that the article need not be a gift tag. It could be any other surface which it may be required to apply handwriting. Examples are metal tags, metal plaques and metal panels, on greetings cards, stationery, membership cards, invitations or as luggage labels, identity badges, product labels, security printed items and business cards.

## Claims

1. An article having a metal surface which carries handwriting in a permanent spirit-based waterproof ink.

2. A kit of parts comprising an article having a metal surface of and a pen having a permanent spirit-based waterproof ink.

3. A method of writing a message on a surface of metal or metal alloy comprising writing on the surface using a permanent spirit-based waterproof ink.

4. An article or a kit of parts or a method according to any one of claims 1 to 3 wherein the permanent spirit based waterproof ink is a mixture of low boiling point alcohols and glycolethers in which is dissolved a dye.

5. An article or a kit of parts or a method according to any one of claims 1 to 4 wherein the article is a metal tag or a metal plaque or a metal panel.

6. An article or a kit of parts or a method according to any one of claims 1 to 5 wherein the surface is anodized aluminium or stainless steel or gold.

7. An article or a kit of parts or a method according to any one of claims 1 to 4 and in the form of a sheet.

8. An article or a kit of parts or a method according to claim 7 and including means by which the article may be connected to another article.

9. An article or a kit of Parts or a method according to any one of claims 1 to 8 and having printing on the surface thereof.

Fig.1.

On your Wedding Day

Fig.2.

Just for you

Fig.3.